# EUROPÄISCHE PATENTSCHRIFT

(11) **EP 3 327 621 B1**
(45) Veröffentlichungstag und Bekanntmachung des Hinweises auf die Patenterteilung: **02.09.2020**
(21) Anmeldenummer: 17201655.2
(22) Anmeldetag: 14.11.2017
(51) Int. Cl.: B62D 15/02, G06K 9/00

(54) **VERFAHREN ZUM UNTERSTÜTZEN EINES FAHRERS EINES KRAFTFAHRZEUGS BEI EINEM PARKVORGANG, RECHENEINRICHTUNG, FAHRERASSISTENZSYSTEM SOWIE KRAFTFAHRZEUG**
METHOD FOR SUPPORTING A DRIVER OF A MOTOR VEHICLE WHEN PARKING A MOTOR VEHICLE, COMPUTER UNIT, DRIVER ASSISTANCE SYSTEM AND MOTOR VEHICLE
PROCÉDÉ D'AIDE À LA CONDUITE D'UN VÉHICULE AUTOMOBILE LORS DU STATIONNEMENT, DISPOSITIF DE CALCUL, SYSTÈME D'AIDE À LA CONDUITE AINSI QUE VÉHICULE AUTOMOBILE

(30) Priorität: 25.11.2016 DE 102016122749
(43) Veröffentlichungstag der Anmeldung: 30.05.2018
(73) Patentinhaber: Valeo Schalter und Sensoren GmbH, 74321 Bietigheim-Bissingen (DE)
(72) Erfinder: Blinkle, Frank, 74321 Bietigheim-Bissingen (DE); Bariant, Jean-Francois, 74321 Bietigheim-Bissingen (DE); Bulliot, Mathieu, 74321 Bietigheim-Bissingen (DE); Szczytowski, Piotr, 74321 Bietigheim-Bissingen (DE)
(74) Vertreter: Pothmann, Karsten

(56) Entgegenhaltungen:
- DE-A1-102009 046 656
- DE-A1-102015 002 144

## Beschreibung

Die Erfindung betrifft ein Verfahren zum Unterstützen eines Fahrers eines Kraftfahrzeugs bei einem Parkvorgang in eine Parklücke, wobei bei dem Verfahren anhand von Sensordaten zumindest einer fahrzeugseitigen Sensoreinrichtung die Parklücke in einem Umgebungsbereich des Kraftfahrzeugs und in zumindest einem Messzyklus der Sensoreinrichtung ein bodennahes Objekt in und/oder an der Parklücke erkannt werden und eine Position des bodennahen Objektes in dem Umgebungsbereich bestimmt wird. Die Erfindung betrifft außerdem eine Recheneinrichtung, ein Fahrerassistenzsystem zum Unterstützen eines Fahrers eines Kraftfahrzeugs bei einem Parkvorgang in eine Parklücke sowie ein Kraftfahrzeug mit einem solchen Fahrerassistenzsystem.

Vorliegend richtet sich das Interesse auf Fahrerassistenzsysteme, insbesondere auf Parkassistenzsysteme, welche einen Fahrer eines Kraftfahrzeugs bei einem Parkvorgang unterstützen. Aus dem Stand der Technik sind hierzu bereits Fahrerassistenzsysteme bekannt, welche mit Hilfe von Sensoren, beispielsweise Ultraschallsensoren, Parklücken beziehungsweise freie Stellplätze in einem Umgebungsbereich des Kraftfahrzeugs erkennen können und den Fahrer beim Einparken in die Parklücke und/oder beim Ausparken aus der Parklücke unterstützen. Die Unterstützung kann beispielsweise durch Ausgeben entsprechender Fahrhinweise beziehungsweise Signale an den Fahrer, durch semi-autonomes Manövrieren des Kraftfahrzeugs oder durch vollautonomes Manövrieren des Kraftfahrzeugs erfolgen.

Auch ist es bekannt, den Fahrer beim Einparken in eine Parklücke mit einem bodennahen Objekt, beispielsweise einem Bordstein oder einer Stufe, zu unterstützen. Dazu sind in der EP 2 370 306 B1 eine Steuereinrichtung und ein Verfahren zur Einparkunterstützung gezeigt. Dabei wird mittels einer Sensoreinrichtung eine Begrenzung einer Parklücke, beispielsweise ein Bordstein, erfasst. Außerdem wird ein Fahrweg zu einer Parkposition unter Berücksichtigung einer Überragbarkeit der Begrenzung durch ein Karosserieteil des Kraftfahrzeugs bestimmt. Somit kann eine Beschädigung des Karosserieteils verhindert werden.

Um eine Beschädigung von Rädern, insbesondere von Reifen, des Kraftfahrzeugs während einer Bordsteinüberfahrt zu vermeiden, schlägt die DE 10 2009 003 216 A1 ein Fahrerassistenzverfahren zum Auslösen einer vorbestimmten Aktion in Abhängigkeit von einem erfassten Höhenprofil einer Fahrbahnoberfläche eines Kraftfahrzeugs vor. Wenn anhand des Höhenprofils ein Bordstein erfasst wurde, so kann beispielsweise eine Einparktrajektorie für das Kraftfahrzeug derart angepasst werden, dass sie in einem vorbestimmten Winkel über den Bordstein führt. DE 10 2009 046656 beschreibt ein Verfahren zur Erkennung einer zum Einparken eines Fahrzeuges geeigneten Parklücke. DE 10 2015 002144 beschreibt ein Verfahren zum Betrieb eines Sicherheitssystems zur Kollisionsvermeidung und/oder Kollisionsfolgenminderung in einem innerhalb einer Navigationsumgebung betriebenen Kraftfahrzeugs.

Probleme beim Einparken in Parklücken mit solchen bodennahen Objekten ergeben sich dann, wenn das bodennahe Objekt während des Parkvorgangs nicht mehr durch die Sensoren des Kraftfahrzeugs erfasst werden kann, da es sich außerhalb eines Erfassungsbereiches der Sensoren befindet, und daher fälschlicherweise angenommen wird, das bodennahe Objekt sei nicht mehr vorhanden. Dann kann es nämlich zu einer Beschädigung des Kraftfahrzeugs, beispielsweise eines Karosserieteils oder von Rädern des Kraftfahrzeugs, kommen, wenn das Objekt bei dem Parkvorgang ignoriert wird.

Es ist Aufgabe der vorliegenden Erfindung, einen für ein Kraftfahrzeug besonders schonenden Parkvorgang bereitzustellen, durch welchen das Kraftfahrzeug beschädigungsfrei in eine Parklücke eingeparkt werden kann.

Diese Aufgabe wird erfindungsgemäß durch ein Verfahren und eine Recheneinrichtung gemäß den jeweiligen unabhängigen Ansprüchen gelöst. Vorteilhafte Ausführungsformen der Erfindung sind Gegenstand der abhängigen Ansprüche, der Beschreibung sowie der Figuren.

Gemäß einer Ausführungsform eines erfindungsgemäßen Verfahrens zum Unterstützen eines Fahrers eines Kraftfahrzeugs bei einem Parkvorgang in eine Parklücke werden anhand von Sensordaten zumindest einer fahrzeugseitigen Sensoreinrichtung die Parklücke in einem Umgebungsbereich des Kraftfahrzeugs und in zumindest einem Messzyklus der Sensoreinrichtung ein bodennahes Objekt in und/oder an der Parklücke erkannt und eine Position des bodennahen Objektes in dem Umgebungsbereich bestimmt. Insbesondere werden das in dem zumindest einen Messzyklus bestimmte Vorhandensein des bodennahen Objektes und die in dem zumindest einen Messzyklus bestimmte Position des bodennahen Objektes zumindest für eine Dauer des Parkvorgangs weiterhin angenommen, falls in zumindest einem während des Parkvorgangs durchgeführten weiteren Messzyklus der Sensoreinrichtung anhand der Sensordaten ein Nichtvorhandensein des bodennahen Objektes erkannt wird, da sich das Objekt aus dem Erfassungsbereich der Sensoreinrichtung herausbewegt hat.

Bevorzugt werden bei einem erfindungsgemäßen Verfahren zum Unterstützen eines Fahrers eines Kraftfahrzeugs bei einem Parkvorgang in eine Parklücke anhand von Sensordaten zumindest einer fahrzeugseitigen Sensoreinrichtung die Parklücke in einem Umgebungsbereich des Kraftfahrzeugs und in zumindest einem Messzyklus der Sensoreinrichtung ein bodennahes Objekt in und/oder an der Parklücke erkannt und eine Position des bodennahen Objektes in dem Umgebungsbereich bestimmt. Darüber hinaus werden das in dem zumindest einen Messzyklus bestimmte Vorhandensein des bodennahen Objektes und die in dem zumindest einen Messzyklus bestimmte Position des bodennahen Objektes zumindest für eine Dauer des Parkvorgangs weiterhin angenommen, falls in zumindest einem während des Parkvorgangs durchgeführten weiteren Messzyklus der Sensoreinrichtung anhand der Sensordaten ein Nichtvorhandensein des bodennahen Objektes erkannt wird.

Mittels des Verfahrens kann ein Fahrerassistenzsystem beziehungsweise ein Parkhilfesystem realisiert werden, welches den Fahrer bei dem Parkvorgang beziehungsweise Parkmanöver in eine Parklücke unterstützt. Insbesondere wird der Fahrer unterstützt, indem das Kraftfahrzeug zumindest semi-autonom, also semi-autonom oder autonom, in die Parklücke eingeparkt wird. Beim semi-autonomen Manövrieren übernimmt das Fahrerassistenzsystem eine Lenkung des Kraftfahrzeugs, während der Fahrer des Kraftfahrzeugs das Gaspedal sowie die Bremse des Kraftfahrzeugs betätigt. Beim autonomen beziehungsweise vollautonomen Manövrieren betätigt das Fahrerassistenzsystem zusätzlich zu der Lenkung auch das Gaspedal und die Bremse, sodass das Kraftfahrzeug automatisch gelenkt, beschleunigt und abgebremst wird.

Die Parklücke kann anhand der Sensordaten der fahrzeugseitigen Sensoreinrichtung erkannt und vermessen werden. Zu diesem Zweck kann das Kraftfahrzeug beispielsweise bewegt werden, während der Umgebungsbereich des Kraftfahrzeugs mittels der Sensoreinrichtung insbesondere kontinuierlich erfasst wird. Es werden also kontinuierlich zu vorbestimmten Messzeitpunkten bzw. in vorbestimmten Messzyklen Sensordaten aus dem Umgebungsbereich erfasst. Die Sensordaten können von einer Recheneinrichtung des Fahrerassistenzsystems empfangen und ausgewertet werden. Die Sensordaten werden insbesondere von zumindest einem Abstandssensor, beispielsweise zumindest einem Ultraschallsensor und/oder zumindest einem Radarsensor und/oder zumindest einem Laserscanner, erfasst. Vorzugsweise werden die Sensordaten von einer Vielzahl von Ultraschallsensoren erfasst, welche verteilt am Kraftfahrzeug angeordnet sein können. Beispielsweise können vier Ultraschallsensoren an einem Frontbereich des Kraftfahrzeugs zum Überwachen des Umgebungsbereiches vor dem Kraftfahrzeug angeordnet sein und vier weitere Ultraschallsensoren an einem Heckbereich des Kraftfahrzeugs zum Überwachen des Umgebungsbereiches hinter dem Kraftfahrzeug angeordnet sein.

In der Parklücke und/oder angrenzend an die Parklücke ist dabei das bodennahe Objekt positioniert. Das bodennahe, der Parklücke zugeordnete Objekt kann beispielsweise ein niedriges, länglich ausgedehntes Objekt, insbesondere ein Bordstein bzw. Randstein, sein, welcher einen ersten Bereich auf einem Niveau eines Bodens bzw. einer Fahrbahnoberfläche des Kraftfahrzeugs von einem gegenüber dem ersten Bereich zweiten Bereich trennt. Der zweite Bereich ist also als eine Stufe ausgebildet, wobei das Objekt Übergang zwischen dem ersten und dem zweiten Bereich ausbildet. Das bodennahe Objekt kann aber beispielsweise auch ein Parkpoller, ein Stein oder eine niedrige Mauer sein. Das bodennahe Objekt kann dabei derart in der Parklücke angeordnet sein, dass es während des Einparkens von zumindest zwei Rädern des Kraftfahrzeugs überwunden beziehungsweise überfahren wird. Das Objekt kann also derart in der Parklücke angeordnet sein, dass das Kraftfahrzeug nach Beendigung des Parkvorgangs in einer Parkstellung mit zumindest zwei Rädern auf dem Objekt platziert beziehungsweise positioniert ist oder das Objekt von dem Kraftfahrzeug umfahren werden muss. Auch kann das Objekt eine Begrenzung der Parklücke sein, welche derart an einem Rand der Parklücke positioniert ist, dass bei dem Parkvorgang ein Karosserieteil des Kraftfahrzeugs, beispielsweise eine Stoßstange bzw. ein Stoßfänger des Kraftfahrzeugs, über das Objekt bewegt wird und/oder das Karosserieteil in der Parkstellung überlappend mit dem Objekt positioniert wird.

Das Objekt wird dabei in dem zumindest einem Messzyklus der Sensoreinrichtung erkannt. Beispielsweise kann das Objekt bereits vor Beginn des Parkvorgangs, beispielsweise bei einer Vorbeifahrt an der Parklücke, oder erst während des Parkvorgangs, beispielsweise beim Eintauchen in die Parklücke, erkannt werden. Ein Zeitpunkt, zu welchem das der Parklücke zugeordnete Objekt erkannt wird, ist insbesondere abhängig von einer Lage des Objektes in und/oder an der Parklücke, einer Reichweite der Sensoreinrichtung und einer Einbauhöhe der Sensoreinrichtung am Kraftfahrzeug. Sobald das Objekt durch die Bewegung des Kraftfahrzeugs in Richtung des Objektes einen Erfassungsbereich der zumindest einen Sensoreinrichtung betritt, kann das Vorhandensein des Objektes erkannt und eine Position des Objektes in dem Umgebungsbereich, insbesondere ein Abstand des Objektes relativ zum Kraftfahrzeug, anhand der Sensordaten bestimmt werden. Bei einer Sensoreinrichtung mit Ultraschallsensoren kann das Objekt beispielsweise erkannt werden, sobald es einen mit der Reichweite des Ultraschallsensors korrespondierenden Abstand, beispielsweise 2 m, unterschreitet.

Wenn sich aber das Kraftfahrzeug während des Einparkens weiter auf das bodennahe Objekt zubewegt, so kann es sein, dass das Objekt in weiteren, von der Sensoreinrichtung durchgeführten Messzyklen nicht mehr zweifelsfrei anhand der Sensordaten erkannt werden kann, da sich das Objekt aus dem Erfassungsbereich der Sensoreinrichtung heraus bewegt hat. Dieses Problem tritt insbesondere bei Abstandssensoren, welche Objekte im Nahbereich nicht zweifelsfrei erkennen können, sowie bei Parkvorgängen in Querparklücken auf. Beispielsweise im Falle eines Ultraschallsensors treffen die Schallwellen, beispielsweise bei einem Abstand von weniger als 30 cm zu dem Objekt, nicht mehr auf das Objekt, sondern werden über das Objekt hinweg ausgesendet. Die Schallwellen werden also nicht mehr an dem Objekt reflektiert. Das Objekt kann also nicht mehr anhand der Sensordaten erkannt werden. Um nun zu verhindern, dass fälschlicherweise das Nichtvorhandensein des Objektes angenommen wird, wird das Vorhandensein des Objektes zumindest für die Dauer des Parkvorgangs angenommen sowie die Position des Objektes in und/oder an der Parklücke beim Durchführen des Parkvorgangs postuliert bzw. als bekannt vorausgesetzt. Das Objekt sowie dessen globale Position in dem Umgebungsbereich werden also von dem Fahrerassistenzsystem gehalten, selbst wenn sich das Objekt bei dem zumindest einen weiteren Messzyklus außerhalb des Erfassungsbereiches der fahrzeugseitigen Sensoreinrichtung befindet und somit das Vorhandensein des Objektes nicht anhand der Sensordaten erkennbar ist. Anders ausgedrückt bedeutet dies, dass das Vorhandensein des Objektes sowie dessen Position als gegeben vorausgesetzt werden, sobald anhand der Sensordaten das Nichtvorhandensein des Objektes während des Parkvorgangs erfasst wird.

Durch das Annehmen des Vorhandenseins des Objektes unabhängig von den in dem zumindest einen weiteren Messzyklus erfassten Sensordaten kann beispielsweise verhindert werden, dass das Karosserieteil des Kraftfahrzeugs bei dem Parkvorgang mit dem Objekt kollidiert und/oder Räder des Kraftfahrzeugs bei Korrekturzügen während des Einparkens unnötig oft über das Objekt bewegt und damit zumindest langfristig beschädigt werden. Durch das Verfahren kann somit ein besonders schonender Parkvorgang für das Kraftfahrzeug bereitgestellt werden und das Kraftfahrzeug beschädigungsfrei in die Parklücke eingeparkt werden.

Besonders bevorzugt werden die Parklücke und das bodennahe Objekt in dem zumindest einen Messzyklus in einer den Umgebungsbereich beschreibenden Umgebungskarte hinterlegt, wobei ein Löschen des Objektes aus der Umgebungskarte verhindert wird, falls in dem zumindest einen weiteren Messzyklus das Nichtvorhandensein des bodennahen Objektes erkannt wird. Die Umgebungskarte ist dabei eine für die Recheneinrichtung auslesbare Karte, welche beispielsweise in einer fahrzeugseitigen Speichereinrichtung hinterlegt wird und in welche die von der fahrzeugseitigen Sensoreinrichtung erfassten Parklücken und Objekte eingetragen werden können. In der Umgebungskarte können räumliche Lagen der Parklücke und der Objekte zu dem Kraftfahrzeug angegeben sein. Die Umgebungskarte beschreibt den Umgebungsbereich des Kraftfahrzeugs also objektbasiert. Dabei kann sich das Kraftfahrzeug beispielsweise in einem Ursprung eines Koordinatensystems der Umgebungskarte befinden. Die Umgebungskarte kann also in einem Fahrzeugkoordinatensystem angegeben werden, wobei die Position der Parklücke und die Position des bodennahen Objektes relativ zum Kraftfahrzeug angegeben sind. Unter Kenntnis einer absoluten Position des Kraftfahrzeugs, welche beispielsweise in GPS-Koordinaten angegeben ist, können in der Umgebungskarte auch globale Positionen der Objekte und der Parklücke in dem Umgebungsbereich angegeben werden. Anhand der Umgebungskarte kann von dem Fahrerassistenzsystem der Parkvorgang geplant werden, beispielsweise indem eine Einparktrajektorie bestimmt wird, entlang welcher sich das Kraftfahrzeug in die Parklücke bewegt. In der Umgebungskarte können dabei auch die Sensordaten verschiedener Sensoreinrichtungen fusioniert werden, sodass diese den Umgebungsbereich möglichst genau beschreibt bzw. charakterisiert. Die Umgebungskarte kann dabei kontinuierlich, in Abhängigkeit von Sensordaten der Sensoreinrichtungen des Kraftfahrzeugs aktualisiert werden.

Dabei ist es nun vorgesehen, dass das Löschen des bodennahen Objektes aus der Umgebungskarte verhindert wird, wenn sich das Kraftfahrzeug in die Parklücke und damit auf das Objekt zubewegt und das Objekt nicht mehr durch die Sensordaten erfasst werden kann. Es wird also eine Aktualisierung der Umgebungskarte hinsichtlich des Objektes in und/oder an der Parklücke insoweit verhindert bzw. unterbunden, als dass das Objekt aus der Umgebungskarte gelöscht wird, wenn das Objekt nicht mehr anhand der Sensordaten erkannt werden kann. Das Objekt wird also zumindest für die Dauer des Parkvorgangs in der Umgebungskarte gespeichert und dort gehalten. Die Umgebungskarte kann jedoch wieder aktualisiert werden, wenn das Objekt während des Parkvorgangs wieder eindeutig anhand der Sensordaten erkannt werden kann. Durch das Bereitstellen der Umgebungskarte und das Verhindern einer fehlerhaften Aktualisierung der Umgebungskarte kann der Parkvorgang besonders einfach geplant und zuverlässig durchgeführt werden.

Vorzugsweise wird eine Initialposition des Objektes in dem zumindest einen Messzyklus relativ zum Kraftfahrzeug anhand der Sensordaten bestimmt. Aktuelle Positionen des Objektes relativ zum Kraftfahrzeug während der Durchführung des Parkvorgangs werden anhand von Odometriedaten des Kraftfahrzeugs und der Initialposition bestimmt. Die Initialposition bzw. Initiallage des bodennahen Objektes relativ zum Kraftfahrzeug kann also einmalig in dem zumindest einen Messzyklus bestimmt werden. In weiterfolgenden Messzyklen können die aktuellen Positionen des Objektes relativ zum Kraftfahrzeug, welche sich aufgrund der Bewegung des Kraftfahrzeugs verändern, mittels Odometrie bestimmt werden. Es kann aber auch vorgesehen sein, dass, solange sich das Objekt in dem Erfassungsbereich der Sensoreinrichtung befindet, aktuelle Positionen anhand der Sensordaten erfasst werden und mit den anhand der Odometriedaten bestimmten Positionen abgeglichen werden. Mittels Odometrie kann eine Lage des Kraftfahrzeugs zu dem Objekt anhand von Daten eines Vortriebsystems des Kraftfahrzeugs bestimmt werden. Solche Odometriedaten des Kraftfahrzeugs sind beispielsweise eine Anzahl an Radumdrehungen, ein Lenkwinkel, ein Raddurchmesser, etc. Sobald das Objekt den Erfassungsbereich der Sensoreinrichtung verlässt, kann die relative Lage des Objektes zu dem Kraftfahrzeug mittels Odometrie bestimmt und somit kontinuierlich erfasst werden. Somit kann beispielsweise die Umgebungskarte hinsichtlich einer Position des bodennahen Objektes relativ zum Kraftfahrzeug aktualisiert werden. Die Umgebungskarte kann somit den Umgebungsbereich besonders realitätsnah abbilden. Basierend auf dieser Umgebungskarte kann dann ein zuverlässiger und für das Kraftfahrzeug schonender Parkvorgang bereitgestellt werden.

In einer besonders vorteilhaften Weiterbildung der Erfindung wird das bodennahe Objekt anhand der Sensordaten der zumindest einen fahrzeugseitigen Sensoreinrichtung als ein länglich ausgedehntes Objekt, insbesondere ein Bordstein, klassifiziert. Das Objekt wird also als der Bordstein erkannt und somit von anderen, nicht relevanten niedrigen Objekten in und/oder an der Parklücke unterschieden. Zum Klassifizieren des Objektes als der Bordstein kann beispielsweise bestimmt werden, ob Detektionspunkte in den Sensordaten, welche im Falle eines Abstandssensors Reflexionen an dem Objekt beschreiben, über eine vorbestimmte Mindestlänge auf einer geraden Linie liegen. Falls ja, wird das Objekt als ein länglich ausgedehntes, bordsteinähnliches Objekt identifiziert. Außerdem können eine Ausrichtung bzw. Ausdehnung des bordsteinähnlichen Objektes in der Parklücke sowie ein Abstand des Objektes zu dem Kraftfahrzeug bestimmt werden.

Falls beispielsweise der Abstand des Objektes zu dem Kraftfahrzeug einen vorbestimmten Maximalabstand überschreitet und/oder eine vorbestimmte Ausrichtung aufweist, so kann das Objekt als ein nicht relevantes Objekt klassifiziert werden, welches bei dem Parkvorgang beispielsweise nicht berücksichtigt werden muss.

In einer vorteilhaften Ausführungsform der Erfindung wird das bodennahe Objekt anhand der Sensordaten der Sensoreinrichtung als für das Kraftfahrzeug überfahrbar oder nicht überfahrbar klassifiziert, und eine Fahrtroute in die Parklücke und/oder eine Parkstellung des Kraftfahrzeugs in der Parklücke anhand der Klassifizierung des Objektes bestimmt. Zum Klassifizieren des Objektes kann anhand der Sensordaten der Sensoreinrichtung beispielsweise eine Höhe des Objektes, also eine Ausdehnung des Objektes senkrecht zu der Fahrbahnoberfläche des Kraftfahrzeugs, erfasst werden. Das Objekt kann dann als für das Kraftfahrzeug überfahrbar bewertet werden, wenn die Höhe des Objektes einen vorbestimmten Höhengrenzwert unterschreitet. Andernfalls wird das Objekt als nicht überfahrbar für das Kraftfahrzeug klassifiziert und somit das Objekt als Hindernis für das Kraftfahrzeug betrachtet. Der Höhengrenzwert entspricht dabei höchstens einer sogenannten Bodenfreiheit des Kraftfahrzeugs, welche einen Abstand einer Karosserie des Kraftfahrzeugs zu einer Fahrbahn des Kraftfahrzeugs beschreibt.

In Abhängigkeit von der Klassifizierung des Objektes und der als bekannt vorausgesetzten Position des Objektes in und/oder an der Parklücke kann die Fahrtroute bestimmt werden. Dazu kann beispielsweise eine Einparktrajektorie geplant werden bzw. eine Trajektorienplanung durchgeführt werden. Die Einparktrajektorie ist insbesondere eine prädiktiv bestimmte Bahnkurve, entlang welcher sich das Kraftfahrzeug während des Parkvorgangs in die Parklücke bewegen soll. Wenn das Objekt als nicht überfahrbar für das Kraftfahrzeug klassifiziert wurde, so kann die Einparktrajektorie, falls möglich, derart bestimmt werden, dass das Kraftfahrzeug das Objekt während des Einparkens umfährt und in der Parkstellung beabstandet zu dem Objekt, insbesondere überlappungsfrei mit dem Objekt, angeordnet ist. Auch kann vorgesehen sein, dass eine Fahrtrichtung des Kraftfahrzeugs adaptiv während des Manövrierens des Kraftfahrzeugs angepasst wird. Hier erfolgt also beispielsweise keine Trajektorienplanung. Das Kraftfahrzeug bewegt sich in dem Umgebungsbereich, wobei die Fahrtroute durch die aktuelle Fahrtrichtung des Kraftfahrzeugs vorgegeben ist. Die Fahrtrichtung wird dann verändert und/oder das Kraftfahrzeug wird automatisch abgebremst, falls sich das Kraftfahrzeug beim Fahren auf das Objekt, dessen Position als bekannt vorausgesetzt ist, zubewegt. Die adaptive Fahrtrichtungsanpassung ("Exploration Mode", "Schnüffelmodus", "Erkundungsmodus") kann beispielsweise bereitgestellt werden, wenn sich das Kraftfahrzeug auf Parkplatzsuche in einer Parkgarage aufweisend mehrere Parklücken befindet. Durch das Postulieren des Vorhandenseins des Objektes in und/oder an der Parklücke können also im Falle eines als nicht überfahrbar klassifizierten Objektes eine Kollision des Karosserieteils mit dem Objekt und damit eine Beschädigung des Kraftfahrzeugs verhindert werden.

Wenn das Objekt als für das Kraftfahrzeug überfahrbar bewertet wurde, so kann die Einparktrajektorie derart bestimmt werden, dass die Räder während des Einparkens über das Objekt bewegt werden. Durch die vorausgesetzte Kenntnis der Position des Objektes kann dann beispielsweise durch das Fahrerassistenzsystem automatisch ein zum Überwinden des Objektes erforderliches, erhöhtes Drehmoment auf die Räder des Kraftfahrzeugs übertragen werden, sobald sich das Kraftfahrzeug an der Position des Objektes, welche beispielsweise in der Umgebungskarte für die Dauer des Parkvorgangs fest hinterlegt ist, befindet.

Es kann vorgesehen sein, dass im Falle eines als überfahrbar klassifizierten Objektes die Fahrtroute in die Parklücke derart bestimmt wird, dass eine Anzahl an Überfahrvorgängen des Objektes durch zumindest ein Rad des Kraftfahrzeugs eine vorbestimmte Anzahl unterschreitet und/oder dass die Parkstellung derart bestimmt wird, dass in der Parkstellung eine Lauffläche des zumindest einen Rads beabstandet zu einer Kante des Objektes positioniert ist. Gemäß dieser Ausführungsform wird die Fahrtroute, beispielsweise die Einparktrajektorie, also derart bestimmt, dass die Anzahl von Überfahrvorgängen, welche beispielsweise im Rahmen von Korrekturzügen zum Korrigieren der Parkstellung durchgeführt werden, minimiert wird. Durch das Minimieren der Überfahrvorgänge kann verhindert werden, dass die Räder während des Einparkens unnötig oft über das bodennahe Objekt bewegt werden. Somit kann einer Schädigung der Räder des Kraftfahrzeugs, insbesondere von Reifen der Räder, vorgebeugt werden. Alternativ oder zusätzlich wird Parkstellung so bestimmt, dass die Lauffläche eines Reifens des Rads nicht an der Kante des Objektes, beispielsweise an einer Bordsteinkante, ansteht. Dazu kann das Rad, ohne das Objekt zu überwinden, derart vor dem Objekt, also in dem ersten Bereich, positioniert werden, dass der Reifen die Kante nicht berührt. Auch kann das Rad nach der Überwindung des Objektes derart auf dem zweiten Bereich positioniert werden, dass das Rad nicht an der Kante übersteht. Es wird also in vorteilhafter Weise verhindert, dass das Rad des Kraftfahrzeugs nur einige Zentimeter auf das Objekt bewegt wird und somit die in die Lauffläche drückende Kante des Objektes den Reifen beschädigt.

In einer Weiterbildung der Erfindung wird im Falle eines als überfahrbar klassifizierten bodennahen Objektes zusätzlich bestimmt, ob ein Überfahren des Objektes während des Parkvorgangs obligatorisch oder fakultativ ist. Für den Fall des fakultativen Überfahrens wird die Fahrtroute des Kraftfahrzeugs derart bestimmt, dass Räder des Kraftfahrzeugs berührungsfrei an dem bodennahen Objekt vorbeibewegt werden, während zumindest ein Karosserieteil des Kraftfahrzeugs über das bodennahe Objekt bewegt wird. Es kann also vorgesehen sein, dass Objekte, welche als für das Kraftfahrzeug überfahrbar klassifiziert wurden, nicht zwangsläufig von den Rädern des Kraftfahrzeugs überfahren werden. Dazu wird bestimmt, ob das Überfahren des Objektes obligatorisch bzw. unumgänglich oder fakultativ bzw. vermeidbar ist. Insbesondere wird das Überfahren des Objektes als fakultativ bewertet, falls eine beim Überfahren des Objektes durch zumindest ein Rad des Kraftfahrzeugs auf dem Objekt zurückgelegte Strecke einen vorbestimmten Schwellwert unterschreitet. Andernfalls wird das Überfahren des Objektes als obligatorisch bewertet. Mit anderen Worten bedeutet dies, dass ein Überfahren des Objektes dann fakultativ bzw. optional ist, falls durch die Räder des Kraftfahrzeugs nur eine kurze Distanz auf dem Objekt, also eine den Schwellwert unterschreitende Strecke, zurückgelegt werden würde. Diese durch die Räder auf dem Objekt zurückgelegte Strecke kann prädiktiv bestimmt werden. Beispielsweise kann die Einparktrajektorie bzw. voraussichtliche Bewegungsbahn des Kraftfahrzeugs bestimmt werden und eine Länge eines über das Objekt führenden Teils der Bewegungsbahn bestimmt werden.

Im fakultativen Fall wird die Fahrtroute des Kraftfahrzeugs so bestimmt oder so verändert bzw. umgeplant, dass die Räder des Kraftfahrzeugs nicht über das Objekt bewegt werden, sondern, insbesondere in einem vorbestimmten Mindestabstand, an dem Objekt vorbeibewegt werden. Das Karosserieteil des Kraftfahrzeugs, beispielsweise ein Seitenbereich eines Fahrzeugchassis und/oder der Stoßfänger des Kraftfahrzeugs, wird dabei über das Objekt bewegt. Mit anderen Worten bedeutet dies, dass das Karosserieteil und der Bordstein zumindest bereichsweise überlappen, während die Räder an dem Objekt vorbeibewegt werden. Unter dem Vorbeibewegen der Räder an dem Objekt ist hier auch ein Positionieren der Räder vor dem Objekt durch ein automatisches Abbremsen des Kraftfahrzeugs zu verstehen. Im obligatorischen Fall werden die Räder über das Objekt bewegt, das Objekt wird also überfahren. Dies bedeutet, dass die Fahrtroute über das Objekt führend bestimmt wird. Aus dieser Ausführungsform ergibt sich der Vorteil, dass ein für die Räder des Kraftfahrzeugs schädigendes Überfahren von Objekten reduziert werden kann, da das Überfahren der Objekte immer dann vermieden wird, wenn das Überfahren optional ist.

Es erweist sich als vorteilhaft, wenn für den Fall des obligatorischen Überfahrens eine erste Parkstellung für das Kraftfahrzeug bestimmt wird, in welcher zumindest ein Rad des Kraftfahrzeugs auf dem Objekt in der Parklücke abgestellt ist, und für den Fall des fakultativen Überfahrens eine zweite Parkstellung bestimmt wird, in welcher die Räder beabstandet zu dem Objekt platziert sind und ein Karosserieteil zumindest bereichsweise mit dem Objekt überlappend platziert ist. Das Objekt kann in diesem Fall der Übergang in einer Parklücke sein, durch welchen der erste Bereich von dem gegenüber dem ersten Bereich erhöhten zweiten Bereich getrennt wird. Anhand der Position des Bordsteins in der Parklücke, welche während des Parkvorgangs als bekannt vorausgesetzt ist, bzw. anhand des durch den zweiten Bereich eingenommenen Anteils einer Fläche der Parklücke kann bestimmt werden, ob das Kraftfahrzeug zumindest bereichsweise auf der Stufe abgestellt werden muss oder nicht. Falls das Kraftfahrzeug in der Parkstellung zumindest bereichsweise auf dem Objekt, also beispielsweise der Stufe, platziert werden muss und damit das Überfahren des Objektes obligatorisch ist, so kann die Fahrtroute in Form von der Einparktrajektorie derart bestimmt werden, dass das Kraftfahrzeug in der ersten Parkstellung abgestellt wird. In der ersten Parkstellung werden insbesondere zumindest zwei Räder des Kraftfahrzeugs auf der Stufe platziert. Im Falle einer Querparklücke werden beispielsweise die beiden Räder zumindest einer Achse des Kraftfahrzeugs, also der Vorderachse und/oder der Hinterachse, auf dem zweiten Bereich platziert.

Falls das Überfahren des Objektes fakultativ ist, so kann die Fahrtroute in Form von der Einparktrajektorie derart bestimmt werden, dass das Kraftfahrzeug nach Durchführung des Einparkvorgangs in der zweiten Parkstellung abgestellt wird. Beispielsweise können die Räder in dem ersten Bereich in einem vorbestimmten Mindestabstand zu dem Übergang platziert sein und das Karosserieteil zumindest bereichsweise mit dem zweiten Bereich überlappend platziert sein. Der Mindestabstand ist dabei insbesondere so gewählt, dass die Räder nicht an dem Objekt anstehen bzw. das Objekt berühren. Das Kraftfahrzeug kann also mit den Rädern besonders nahe an dem Objekt platziert werden, ohne dass das Objekt die Räder beschädigt.

Die Erfindung betrifft außerdem eine Recheneinrichtung für ein Fahrerassistenzsystem eines Kraftfahrzeugs, welche dazu ausgelegt ist, das erfindungsgemäße Verfahren oder eine bevorzugte Ausführungsform davon durchzuführen. Durch die Recheneinrichtung kann die Funktionalität des Fahrerassistenzsystems bereitgestellt werden. Dazu ist die Recheneinrichtung insbesondere dazu ausgelegt, die Sensordaten der fahrzeugseitigen Sensoreinrichtung zu empfangen und auszuwerten.

Ein erfindungsgemäßes Fahrerassistenzsystem zum Unterstützen eines Fahrers eines Kraftfahrzeugs bei einem Parkvorgang in eine Parklücke umfasst zumindest eine Sensoreinrichtung zum Erfassen von Sensordaten aus einem Umgebungsbereich des Kraftfahrzeugs sowie eine erfindungsgemäße Recheneinrichtung. Die Sensoreinrichtung ist insbesondere als eine Abstandssensoreinrichtung ausgebildet, beispielsweise ein Lidarsensor bzw. Laserscanner, ein Radarsensor oder ein Ultraschallsensor. Die Sensoreinrichtung kann aber auch als eine Kamera ausgebildet sein. Die Sensoreinrichtung ist zum Anbringen an dem Kraftfahrzeug ausgelegt.

Ein erfindungsgemäßes Kraftfahrzeug umfasst ein erfindungsgemäßes Fahrerassistenzsystem. Das Kraftfahrzeug ist insbesondere als ein Personenkraftwagen ausgebildet.

Die mit Bezug auf das erfindungsgemäße Verfahren vorgestellten bevorzugten Ausführungsformen und deren Vorteile gelten entsprechend für die erfindungsgemäße Recheneinrichtung, für das erfindungsgemäße Fahrerassistenzsystem sowie für das erfindungsgemäße Kraftfahrzeug.

Mit Angaben "vor", "hinter", "quer", "vorwärts", "rückwärts", "über", "oberhalb", etc. sind für einen vor dem Kraftfahrzeug stehenden und in Längsrichtung des Kraftfahrzeugs blickenden Beobachter gegebene Positionen und Orientierungen angegeben.

Weitere Merkmale der Erfindung ergeben sich aus den Ansprüchen.

Dabei zeigen:
- Fig. 1: eine schematische Darstellung einer Ausführungsform eines erfindungsgemäßen Kraftfahrzeugs;
- Fig. 2a, 2b, 2c: schematische Darstellungen des Kraftfahrzeugs beim Einparken in einer Parklücke;
- Fig. 3: eine schematische Darstellung des Kraftfahrzeugs in einer ersten Parkstellung;
- Fig. 4: eine schematische Darstellung des Kraftfahrzeugs in einer zweiten Parkstellung;
- Fig. 5: eine schematische Darstellung des Kraftfahrzeugs in einer dritten Parkstellung; und
- Fig. 6: eine schematische Darstellung des Kraftfahrzeugs in einer vierten, nicht erlaubten Parkstellung.

In den Figuren sind gleiche sowie funktionsgleiche Elemente mit den gleichen Bezugszeichen versehen.

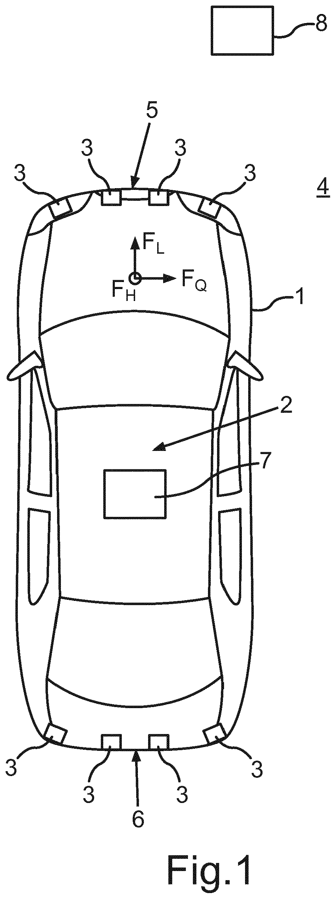

Fig. 1 zeigt ein Kraftfahrzeug 1 gemäß der vorliegenden Erfindung. Das Kraftfahrzeug 1 ist im vorliegenden Fall als ein Personenkraftwagen ausgebildet. Das Kraftfahrzeug 1 umfasst ein Fahrerassistenzsystem 2, welches dazu ausgelegt ist, einen Fahrer des Kraftfahrzeugs 1 bei einem Parkvorgang zu unterstützen. Das Fahrerassistenzsystem 2 kann beispielsweise dazu ausgelegt sein, das Kraftfahrzeug 1 zumindest semi-autonom zu manövrieren. Dazu kann das Fahrerassistenzsystem 2 in eine Lenkung sowie zum vollautonomen Manövrieren in ein Antriebs- und Bremssystem des Kraftfahrzeugs 1 eingreifen. Das Fahrerassistenzsystem 2 weist zumindest eine Sensoreinrichtung 3 auf, welche dazu ausgelegt ist, Sensordaten aus einem Umgebungsbereich 4 des Kraftfahrzeugs 1 zu erfassen. Im vorliegenden Fall weist das Fahrerassistenzsystem 2 acht Sensoreinrichtungen 3 auf, welche hier als Ultraschallsensoren ausgebildet sind. Die Sensoreinrichtungen 3 können aber auch Radarsensoren und/oder Lidarsensoren und/oder Kameras sein. Dabei sind hier vier Ultraschallsensoren 3 in einem Frontbereich 5 des Kraftfahrzeugs 1 angeordnet und dienen dazu, Sensordaten aus dem Umgebungsbereich 4 vordem Kraftfahrzeug 1 zu erfassen. Vier weitere Ultraschallsensoren 3 sind in einem Heckbereich 6 des Kraftfahrzeugs 1 angeordnet und dienen dazu, Sensordaten aus dem Umgebungsbereich 4 hinter dem Kraftfahrzeug 1 zu erfassen.

Die Sensordaten können einer Recheneinrichtung 7 des Fahrerassistenzsystems 2 bereitgestellt werden. Die Recheneinrichtung 7 kann beispielsweise in ein fahrzeugseitiges Steuergerät integriert sein. Die Recheneinrichtung 7 dient dazu, die Sensordaten der Sensoreinrichtung 3 auszuwerten und anhand der Sensordaten Objekte 8 in dem Umgebungsbereich 4 zu erkennen sowie deren Positionen zu bestimmen. Außerdem ist die Recheneinrichtung 7 dazu ausgelegt, das erkannte Objekt 8 als ein bodennahes, niedriges und länglich ausgedehntes Objekt 8, beispielsweise einen Bordstein zu klassifizieren. Außerdem kann die Recheneinrichtung 7 das Objekt 8 als für das Kraftfahrzeug 1 überfahrbar oder nicht überfahrbar bewerten. Dazu kann von der Recheneinrichtung 7 eine Höhe des Objektes 8 bezüglich einer Fahrbahn des Kraftfahrzeugs 1 erfasst werden und das Objekt 8 als für das Kraftfahrzeug 1 überfahrbar klassifiziert werden, falls die Höhe einen vorbestimmten Höhengrenzwert unterschreitet. Andernfalls wird das Objekt 8 als nicht überfahrbar für das Kraftfahrzeug 1 bewertet und das Objekt 8 als Hindernis betrachtet. Beispielsweise kann das Hindernis automatisch umfahren werden und/oder das Kraftfahrzeug 1 automatisch vor dem Hindernis abgebremst werden.

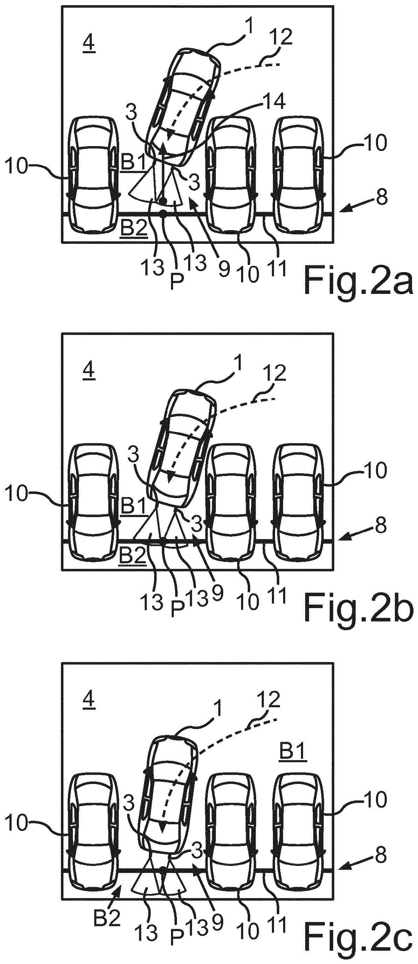

Fig. 2a bis Fig. 2c zeigen das Kraftfahrzeug 1 bei einem Parkvorgang in eine als Querparklücke ausgebildete Parklücke 9. Die Parklücke 9 ist hier seitlich durch zwei andere Fahrzeuge 10 begrenzt. Die Parklücke 9 kann beispielsweise durch die Sensoreinrichtung 3 während einer Vorbeifahrt des Kraftfahrzeugs 1 an der Parklücke 9 erfasst werden und in eine den Umgebungsbereich 4 objektbasiert beschreibende Umgebungskarte eingetragen werden. Die Umgebungskarte kann beispielsweise in einer fahrzeugseitigen Speichereinrichtung hinterlegt sein, auf welche die Recheneinrichtung 7 zugreifen kann. In der Umgebungskarte können Positionen der Parklücke 9 und von Objekten in dem Umgebungsbereich 4 beispielsweise in einem Fahrzeugkoordinatensystem F_{L}, F_{Q}, F_{H}, und damit relativ zum Kraftfahrzeug 1 angegeben sein. In der Parklücke 9 befindet sich hier das Objekt 8, welches als ein Bordstein 11 ausgebildet ist und einen ersten Bereich B1 von einem gegenüber dem ersten Bereich B1 erhöhten zweiten Bereich B2 trennt. Das Kraftfahrzeug 1 wird hier entlang einer durch das Fahrerassistenzsystem 2 prädiktiv bestimmten Einparktrajektorie 12 rückwärts in die Parklücke 9 eingeparkt.

In Fig. 2a taucht das Kraftfahrzeug 1 rückwärts in die Parklücke 9 ein. Das sich in der Parklücke 9 befindliche Objekt 8 kann noch nicht durch die Sensoreinrichtungen 3 erfasst werden, da es sich noch außerhalb von Erfassungsbereichen 13 der Sensoreinrichtungen 3 und damit außerhalb einer Reichweite 14 der Sensoreinrichtungen 3 befindet. In Fig. 2b hat sich das Kraftfahrzeug 1 weiter in die Parklücke 9 bewegt und damit auf das Objekt 8 zubewegt. Das Objekt 8 befindet sich nun in dem Erfassungsbereich 13 der Sensoreinrichtungen 3 und kann nun anhand der Sensordaten der Sensoreinrichtungen 3 erkannt werden. Außerdem wird eine Position P des Objektes 8 in dem Umgebungsbereich 4, insbesondere in der Parklücke 9, anhand der Sensordaten bestimmt. Zusätzlich kann das Objekt 8 anhand der Sensordaten als der Bordstein 11 klassifiziert werden. Da sich zu dem Objekt 8 gehörige Detektionspunkte bzw. Reflexionspunkte in den Sensordaten auf einer geraden Linie befinden, kann das Objekt 8 hier anhand seiner länglichen Ausdehnung als der Bordstein 11 erkannt werden. Außerdem kann anhand einer Höhe des Objektes 8 bestimmt werden, ob das Objekt 8 für das Kraftfahrzeug 1 beschädigungsfrei überfahrbar ist oder nicht. Das Objekt 8 sowie dessen Position P in dem Umgebungsbereich 4 können ebenfalls in die Umgebungskarte eingetragen werden.

In Fig. 2c hat sich das Kraftfahrzeug 1 entlang der Einparktrajektorie 12 noch weiter in die Parklücke 9 bewegt. Das Objekt 8 befindet sich nicht mehr in den Erfassungsbereichen 13 der Sensoreinrichtungen 3, da die Erfassungsbereiche 13 aufgrund einer vorgegebenen Einbauhöhe am Kraftfahrzeug 1 und aufgrund einer vorgegebenen Blickrichtung der Sensoreinrichtungen 3 über das Objekt 8 hinweg gerichtet sind. Anhand der des in Fig. 2c durchgeführten Messzyklus erfassten Sensordaten wird nun fälschlicherweise ein Nichtvorhandensein bzw. Fehlen des Objektes 8 angenommen. Um dies zu verhindern, wird das Vorhandensein des Objektes 8 zumindest für die Dauer des Parkvorgangs angenommen sowie dessen Position P als bekannt angenommen. Beispielsweise kann vorgesehen sein, dass ein Löschen des Objektes 8 sowie dessen Position P aus der Umgebungskarte verhindert wird. Wenn die Position P des Objektes 8 als eine bezüglich des Kraftfahrzeugs 1 definierte Lage, beispielsweise als ein Abstand zwischen Kraftfahrzeug 1 und Objekt 8, angegeben ist, so kann die aktuelle Lage des Objekts 8 beispielsweise anhand von Odometriedaten des Kraftfahrzeugs 1 bestimmt werden. Somit kann die Umgebungskarte anhand der durch Odometrie bestimmten Lage des Objektes 8 zum Kraftfahrzeug 1 aktualisiert werden. Die Umgebungskarte bildet also den Umgebungsbereich 4 realitätsnah ab, auch wenn der Umgebungsbereich 4 anhand der Sensordaten der Sensoreinrichtungen 3 nicht korrekt erfasst werden kann.

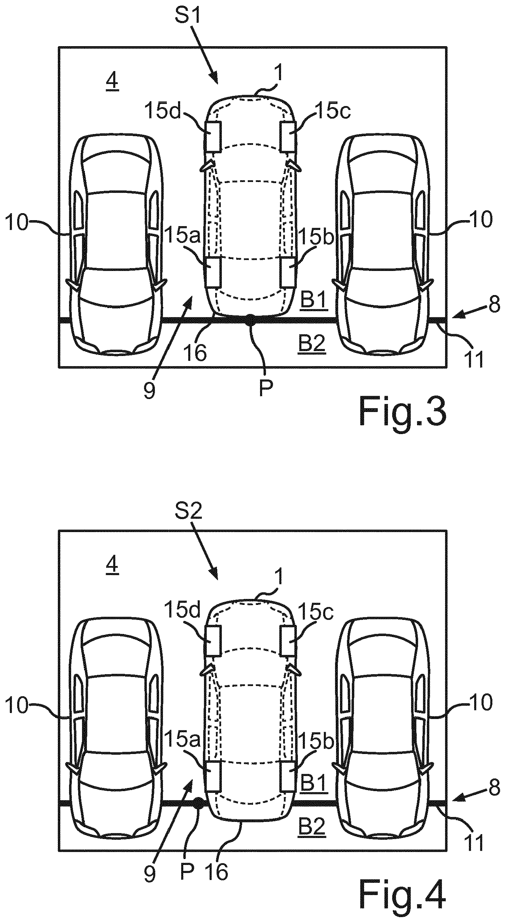

In den Fig. 3 bis 5 sind mögliche Parkstellungen S1, S2, S3 gezeigt, welche anhand der Position P des Objektes 8 sowie anhand der Klassifizierung des Objektes 8 als überfahrbar oder als nicht überfahrbar bestimmt werden. Gemäß Fig. 3 wurde der Bordstein 11 beispielsweise als nicht überfahrbar für Räder 15a, 15b, 15c, 15d des Kraftfahrzeugs 1 klassifiziert. Beispielsweise ist gemäß Fig. 3 eine Höhe des Bordsteins 11 größer als eine Bodenfreiheit des Kraftfahrzeugs 1, sodass eine Beschädigung eines Karosserieteils 16, beispielsweise eines heckseitigen Stoßfängers des Kraftfahrzeugs 1, drohen kann, falls das Kraftfahrzeug 1 nicht rechtzeitig vor der Kollision des Karosserieteils 16 mit dem Bordstein 11 abgebremst wird. Daher wird eine Parkstellung S1 für das Kraftfahrzeug 1 so bestimmt, dass die Räder 15a, 15b, 15c, 15d auf dem ersten Bereich B1 positioniert sind und das Karosserieteil 16 beabstandet zu dem Objekt 8 und damit überlappungsfrei mit dem Objekt 8 positioniert ist.

Gemäß Fig. 4 wurde der Bordstein 11 beispielsweise als überfahrbar für die Räder 15a, 15b, 15c, 15d des Kraftfahrzeugs 1 klassifiziert, jedoch wurde zusätzlich ein Überfahren des Bordsteins 11 durch die Räder 15a, 15b, 15c, 15d als fakultativ bewertet. Dies bedeutet, dass die Räder 15a, 15b, 15c, 15d den Bordstein 11 zwar überfahren können, ohne dass dabei beispielsweise das Karosserieteil 16 beschädigt wird, jedoch können eine Einparktrajektorie und eine Parkstellung S2 für das Kraftfahrzeug 1 bestimmt und bereitgestellt werden, in welcher ein für die Räder 15a, 15b, 15c, 15d schädigendes Überfahren des Bordsteins 11 verhindert wird. Die Parkstellung S2 wird derart bestimmt, dass die Räder 15a, 15b, welche dem Bordstein 11 zugewandt sind, auf dem ersten Bereich B1 und beabstandet zu dem Bordstein 11 angeordnet sind, während das Karosserieteil 16 oberhalb des Bordsteins 11 und somit überlappend mit dem Bordstein 11 angeordnet ist. Durch das beabstandete Positionieren der Räder 15a, 15b zu einer Kante des Bordsteins 11 kann eine Beschädigung einer Lauffläche von Reifen der Räder 15a, 15b verhindert werden. Durch das Positionieren des Karosserieteils 16 über dem Bordstein 11 kann eine besonders platzsparende Parkstellung S2 bereitgestellt werden.

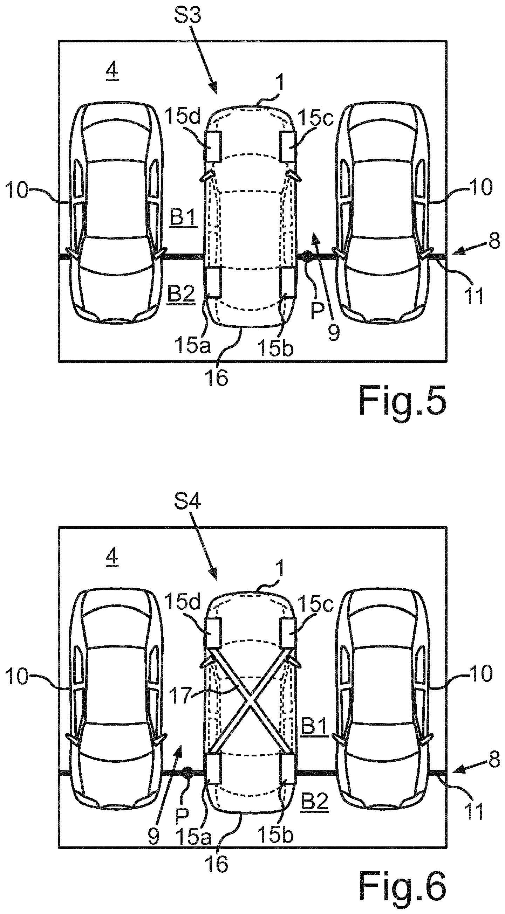

In Fig. 5 wurde der Bordstein 11 beispielsweise als überfahrbar für die Räder 15a, 15b, 15c, 15d des Kraftfahrzeugs 1 klassifiziert und ein Überfahren des Bordsteins 11 durch die Räder 15a, 15b, 15c, 15d aufgrund der Position P des Bordsteins 11 in der Parklücke 9 als obligatorisch bewertet. Aufgrund der Position P des Bordsteins 11 in der Parklücke 9 wird eine Parkstellung S3 hier so bestimmt, dass zumindest die Räder 15a, 15b einer Hinterachse des Kraftfahrzeugs 1 auf dem zweiten Bereich B2 positioniert sind. Dabei wird die Parkstellung S3 aber so vorgegeben, dass die Räder 15a, 15b vollständig auf dem zweiten Bereich B2 und somit beabstandet zu der Kante des Bordsteins 11 positioniert sind. Die Räder 15a, 15b stehen also nicht an der Kante des Bordsteins 11 über. Somit kann verhindert werden, dass die Kante in die Lauffläche der Reifen der Räder 15a, 15b drückt und diese dadurch beschädigt.

In Fig. 6 ist eine durch ein Kreuz 17 gekennzeichnete, nicht erlaubte Parkstellung S4 des Kraftfahrzeugs 1 gezeigt, bei welcher die Räder 15a, 15b der Hinterachse nur bereichsweise auf dem Bordstein 11 positioniert sind. Hier drückt die Bordsteinkante in die Laufflächen der Reifen und beschädigt diese dadurch. Um dies zu verhindern, wird eine solche Parkstellung S4, insbesondere bereits bei der Planung der Einparktrajektorie 12, verhindert. Daraufhin kann, je nach der in der Umgebungskarte hinterlegten Position P des Bordsteins 11, beispielsweise die Parkstellung S2 gemäß Fig. 4 oder die Parkstellung S3 gemäß Fig. 5 für das Kraftfahrzeug 1 bereitgestellt werden.

## Patentansprüche

1. Verfahren zum Unterstützen eines Fahrers eines Kraftfahrzeugs (1) bei einem Parkvorgang in eine Parklücke (9), wobei bei dem Verfahren anhand von Sensordaten zumindest einer fahrzeugseitigen Sensoreinrichtung (3) die Parklücke (9) in einem Umgebungsbereich (4) des Kraftfahrzeugs (1) und in zumindest einem Messzyklus der Sensoreinrichtung (3) ein bodennahes Objekt (8) in und/oder an der Parklücke (9) erkannt werden und eine Position (P) des bodennahen Objektes (8) in dem Umgebungsbereich (4) bestimmt wird,
wobei das in dem zumindest einen Messzyklus bestimmte Vorhandensein des bodennahen Objektes (8) und die in dem zumindest einen Messzyklus bestimmte Position (P) des bodennahen Objektes (8) zumindest für eine Dauer des Parkvorgangs weiterhin angenommen werden, falls in zumindest einem während des Parkvorgangs durchgeführten weiteren Messzyklus der Sensoreinrichtung (3) anhand der Sensordaten ein Nichtvorhandensein des bodennahen Objektes (8) erkannt wird, da sich das Objekt aus dem Erfassungsbereich der Sensoreinrichtung heraus bewegt hat, wobei das bodennahe Objekt (8) anhand der Sensordaten der Sensoreinrichtung (3) als für das Kraftfahrzeug (1) überfahrbar oder nicht überfahrbar klassifiziert wird, und eine Fahrtroute in eine Parkstellung (S1, S2, S3) des Kraftfahrzeugs (1) in der Parklücke (9) anhand der Klassifizierung des Objektes (8) bestimmt wird, **dadurch gekennzeichnet, dass**
im Falle eines als überfahrbar klassifizierten Objektes (8) die Fahrtroute in die Parkstellung (S1, S2, S3) des Kraftfahrzeugs (1) derart bestimmt wird, dass in der Parkstellung (S1, S2, S3) eine Lauffläche des zumindest einen Rads (15a, 15b, 15c, 15c) beabstandet zu einer Kante des Objektes (8) positioniert ist und zusätzlich bestimmt wird, ob ein Überfahren des Objektes (8) während des Parkvorgangs obligatorisch oder fakultativ ist, und für den Fall des fakultativen Überfahrens die Fahrtroute des Kraftfahrzeugs (1) derart bestimmt wird, dass Räder (13) des Kraftfahrzeugs (1) berührungsfrei an dem bodennahen Objekt (8) vorbeibewegt werden, während zumindest ein Karosserieteil (16) des Kraftfahrzeugs (1) über das bodennahe Objekt (8) bewegt wird.

2. Verfahren nach Anspruch 1,
**dadurch gekennzeichnet, dass**
die Parklücke (9) und das bodennahe Objekt (8) in dem zumindest einen Messzyklus in einer den Umgebungsbereich (4) beschreibenden Umgebungskarte hinterlegt werden, wobei ein Löschen des bodennahen Objektes (8) aus der Umgebungskarte verhindert wird, falls in dem zumindest einen weiteren Messzyklus das Nichtvorhandensein des bodennahen Objektes (8) erkannt wird.

3. Verfahren nach Anspruch 1 oder 2,
**dadurch gekennzeichnet, dass**
die Sensordaten von zumindest einem Ultraschallsensor und/oder zumindest einem Laserscanner und/oder zumindest einem Radarsensor des Kraftfahrzeugs (1) erfasst werden.

4. Verfahren nach einem der vorhergehenden Ansprüche,
**dadurch gekennzeichnet, dass**
eine Initialposition des bodennahen Objektes (8) in dem zumindest einen Messzyklus relativ zum Kraftfahrzeug (1) anhand der Sensordaten bestimmt wird und aktuelle Positionen des Objektes (8) relativ zum Kraftfahrzeug (1) während der Durchführung des Parkvorgangs anhand von Odometriedaten des Kraftfahrzeugs (1) und der Initialposition bestimmt werden.

5. Verfahren nach einem der vorhergehenden Ansprüche,
**dadurch gekennzeichnet, dass**
das bodennahe Objekt (8) anhand der Sensordaten der fahrzeugseitigen Sensoreinrichtung (3) zusätzlich als ein länglich ausgedehntes Objekt, insbesondere ein Bordstein (11), klassifiziert wird.

6. Verfahren nach einem der vorhergehenden Ansprüche,
**dadurch gekennzeichnet, dass**
für den Fall des obligatorischen Überfahrens eine erste Parkstellung (S3) für das Kraftfahrzeug (1) bestimmt wird, in welcher zumindest ein Rad (15a, 15b, 15c, 15c) des Kraftfahrzeugs (1) auf dem Objekt (8) in der Parklücke (9) abgestellt ist, und für den Fall des fakultativen Überfahrens eine zweite Parkstellung (S2) bestimmt wird, in welcher die Räder (15a, 15b, 15c, 15c) beabstandet zu dem Objekt (8) platziert sind und ein Karosserieteil (16) des Kraftfahrzeugs (1) zumindest bereichsweise mit dem Objekt (8) überlappend platziert ist.

7. Recheneinrichtung (7) für ein Fahrerassistenzsystem (2) eines Kraftfahrzeugs (1), welche dazu ausgelegt ist, ein Verfahren nach einem der vorhergehenden Ansprüche durchzuführen.

8. Fahrerassistenzsystem (2) zum Unterstützen eines Fahrers eines Kraftfahrzeugs (1) bei einem Parkvorgang in eine Parklücke (9), mit einer Sensoreinrichtung (3) zum Erfassen von Sensordaten aus einem Umgebungsbereich (4) des Kraftfahrzeugs (1) und einer Recheneinrichtung (7) nach Anspruch 7.

9. Kraftfahrzeug (1) mit einem Fahrerassistenzsystem (2) nach Anspruch 8.

## Claims

1. Method for assisting a driver of a motor vehicle (1) during a parking process into a parking space (9) wherein in the method, on the basis of sensor data of at least one vehicle-side sensor apparatus (3) the parking space (9) is detected in a surrounding area (4) of the motor vehicle (1), and in at least one measuring cycle of the sensor apparatus (3) an object (8) which is near to the ground is detected in and/or on the parking space (9), and a position (P) of the object (8) which is near to the ground is determined in the surrounding area (4),
wherein the presence of the object (8) which is near to the ground, which is determined in the at least one measuring cycle, and the position (P) of the object (8) which is near to the ground, which is determined in the at least one measuring cycle, continues to be assumed at least for a duration of the parking process, if the absence of the object (8) which is near to the ground is detected in at least one further measuring cycle, carried out during the parking process, of the sensor apparatus (3) on the basis of the sensor data, since the object has moved out of the sensing range of the sensor apparatus, wherein the object (8) which is near to the ground is classified, on the basis of the sensor data of the sensor apparatus (3), as capable of being driven over or not driven over by the motor vehicle (1), and a route into a parked position (S1, S2, S3) of the motor vehicle (1) in the parking space (9) is determined on the basis of classification of the object (8), **characterized in that**
in the case of an object (8) which is classified as being capable of being driven over, the route into the parked position (S1, S2, S3) of the motor vehicle (1) is determined in such a way that in the parked position (S1, S2, S3) a tread of the at least one wheel (15a, 15b, 15c, 15c) is positioned at a distance from an edge of the object (8), and it is additionally determined whether it is obligatory or optional to drive over the object (8) during the parking process, and in the case of the optional driving over the route of the motor vehicle (1) is determined in such a way that wheels (13) of the motor vehicle (1) are moved past, in a contact-free fashion, the object (8) which is near to the ground, while at least one part (16) of the bodywork of the motor vehicle (1) is moved over the object (8) which is near to the ground.

2. Method according to Claim 1,
**characterized in that**
the parking space (9) and the object (8) which is near to the ground are stored, in the at least one measuring cycle, in a map of the surroundings which describes the surrounding area (4), wherein the object (8) which is near to the ground is prevented from being deleted from the map of the surroundings if the absence of the object (8) which is near to the ground is detected in the at least one further measuring cycle.

3. Method according to Claim 1 or 2,
**characterized in that**
the sensor data is acquired by at least one ultrasonic sensor and/or at least one laser scanner and/or at least one radar sensor of the motor vehicle (1).

4. Method according to one of the preceding claims,
**characterized in that**
an initial position of the object (8) which is near to the ground is determined relative to the motor vehicle (1), in the at least one measuring cycle, on the basis of the sensor data, and current positions of the object (8) relative to the motor vehicle (1) are determined during the execution of the parking process, on the basis of odometry data of the motor vehicle (1) and the initial position.

5. Method according to one of the preceding claims,
**characterized in that**
the object (8) which is near to the ground is additionally classified on the basis of the sensor data of the vehicle-side sensor apparatus (3) as an elongated object, in particular a curb stone (11) .

6. Method according to one of the preceding claims,
**characterized in that**
in the case of obligatory driving over a first parked position (S3) is determined for the motor vehicle (1), in which parked position (S3) at least one wheel (15a, 15b, 15c, 15c) of the motor vehicle (1) is parked on the object (8) in the parking space (9), and in the case of optional driving over a second parked position (S2) is determined, in which the wheels (15a, 15b, 15c, 15c) are positioned at a distance from the object (8), and a part (16) of the bodywork of the motor vehicle (1) is positioned overlapping at least in certain areas with the object (8).

7. Computer apparatus (7) for a driver assistance system (2) of a motor vehicle (1), which computer apparatus (7) is configured to carry out a method according to one of the preceding claims.

8. Driver assistance system (2) for assisting a driver of a motor vehicle (1) during a parking process into a parking space (9), having a sensor apparatus (3) for acquiring sensor data from a surrounding area (4) of the motor vehicle (1) and a computer device (7) according to Claim 7.

9. Motor vehicle (1) having a driver assistance system (2) according to Claim 8.

## Revendications

1. Procédé d'assistance d'un conducteur d'un véhicule automobile (1) lors d'une manœuvre de stationnement dans un emplacement de stationnement (9), procédé lors duquel l'emplacement de stationnement (9) est reconnu dans une zone environnante (4) du véhicule automobile (1) à l'aide de données de capteur d'au moins un dispositif capteur (3) côté véhicule et un objet (8) proche du sol et/ou au niveau de l'emplacement de stationnement (9) est reconnu dans au moins un cycle de mesure du dispositif capteur (3), et une position (P) de l'objet (8) proche du sol est déterminée dans la zone environnante (4),
la présence de l'objet (8) proche du sol déterminée dans l'au moins un cycle de mesure et la position (P) de l'objet (8) proche du sol déterminée dans l'au moins un cycle de mesure sont également enregistrées au moins pendant une durée de la manœuvre de stationnement dans le cas où, dans au moins un cycle de mesure supplémentaire du dispositif capteur (3) exécuté pendant la manœuvre de stationnement, une non-présence de l'objet (8) proche du sol est reconnue à l'aide des données de capteur, car l'objet s'est déplacé hors de la zone de détection du dispositif capteur, l'objet (8) proche du sol étant classifié comme franchissable ou non franchissable pour le véhicule automobile (1) à l'aide des données de capteur du dispositif capteur (3), et un itinéraire de déplacement dans une position de stationnement (S1, S2, S3) du véhicule automobile (1) dans l'emplacement de stationnement (9) étant déterminé à l'aide de la classification de l'objet (8), **caractérisé en ce que**
dans le cas d'un objet (8) classifié comme franchissable, l'itinéraire de déplacement dans la position de stationnement (S1, S2, S3) du véhicule automobile (1) est déterminé de telle sorte que dans la position de stationnement (S1, S2, S3), une surface de roulement de l'au moins une roue (15a, 15b, 15c, 15c) est positionnée espacée d'un bord de l'objet (8) et il est en plus déterminé si un franchissement de l'objet (8) est obligatoire ou facultatif pendant la manœuvre de stationnement, et dans le cas du franchissement facultatif, l'itinéraire de déplacement du véhicule automobile (1) est déterminé de telle sorte que les roues (13) du véhicule automobile (1) passent à proximité de l'objet (8) proche du sol sans contact, alors qu'au moins une partie de carrosserie (16) du véhicule automobile (1) est déplacée au-dessus de l'objet (8) proche du sol.

2. Procédé selon la revendication 1, **caractérisé en ce que** l'emplacement de stationnement (9) et l'objet (8) proche du sol, dans l'au moins un cycle de mesure, sont enregistrés dans une carte d'environnement qui décrit la zone environnante (4), un effacement de l'objet (8) proche du sol de la carte d'environnement étant empêché dans le cas où la non-présence de l'objet (8) proche du sol est reconnue dans l'au moins un cycle de mesure supplémentaire.

3. Procédé selon la revendication 1 ou 2, **caractérisé en ce que** les données de capteur d'au moins un capteur à ultrasons et/ou d'au moins un dispositif de balayage à laser et/ou d'au moins un capteur radar du véhicule automobile (1) sont acquises.

4. Procédé selon l'une des revendications précédentes, **caractérisé en ce qu'**une position initiale de l'objet (8) proche du sol par rapport au véhicule automobile (1) est déterminée dans un cycle de mesure à l'aide des données de capteur et les positions actuelles de l'objet (8) par rapport au véhicule automobile (1) sont déterminées pendant la réalisation de la manœuvre de stationnement à l'aide de données d'odométrie du véhicule automobile (1) et de la position initiale.

5. Procédé selon l'une des revendications précédentes, **caractérisé en ce que** l'objet (8) proche du sol est en plus classifié à l'aide des données de capteur du dispositif capteur (3) côté véhicule en tant qu'objet étendu en longueur, notamment une pierre de bordure (11).

6. Procédé selon l'une des revendications précédentes, **caractérisé en ce que** dans le cas du franchissement obligatoire, une première position de stationnement (S3) est déterminée pour le véhicule automobile (1), dans laquelle au moins une roue (15a, 15b, 15c, 15c) du véhicule automobile (1) est arrêtée sur l'objet (8) dans l'emplacement de stationnement (9), et dans le cas du franchissement facultatif, une deuxième position de stationnement (S2) est déterminée, dans laquelle les roues (15a, 15b, 15c, 15c) sont placées à distance de l'objet (8) et une partie de carrosserie (16) du véhicule automobile (1) est placée en chevauchement avec l'objet (8) au moins dans certaines zones.

7. Dispositif de calcul (7) pour un système d'assistance au conducteur (2) d'un véhicule automobile (1), lequel est conçu pour mettre en œuvre un procédé selon l'une des revendications précédentes.

8. Système d'assistance au conducteur (2) destiné à assister un conducteur d'un véhicule automobile (1) lors d'une manœuvre de stationnement dans un emplacement de stationnement (9), comprenant un dispositif capteur (3) destiné à acquérir des données de capteur depuis une zone environnante (4) du véhicule automobile (1) et un dispositif de calcul (7) selon la revendication 7.

9. Véhicule automobile (1) équipé d'un système d'assistance au conducteur (2) selon la revendication 8.
